# EUROPÄISCHE PATENTSCHRIFT

(11) **EP 2 940 434 B1**
(45) Veröffentlichungstag und Bekanntmachung des Hinweises auf die Patenterteilung: **20.04.2022**
(21) Anmeldenummer: 15165901.8
(22) Anmeldetag: 30.04.2015
(51) Int. Cl.: G01F 1/00, G01F 1/66

(54) **DURCHFLUSSMESSUNGEN IN GERINNEN UND ROHREN**
FLOW MEASUREMENTS IN GUTTERS AND PIPES
MESURES DE DÉBIT DANS DES RIGOLES ET TUBES

(30) Priorität: 01.05.2014 CH 6502014
(43) Veröffentlichungstag der Anmeldung: 04.11.2015
(73) Patentinhaber: Stebatec AG, 2555 Brügg (CH)
(72) Erfinder: Hesse, Kilian, 2555 Brügg Bei Biel (CH)
(74) Vertreter: Office Freylinger

(56) Entgegenhaltungen:
- WO-A1-95/14214
- DE-A1-102007 042 671
- JP-A- S5 459 623
- JP-A- S6 035 219
- JP-A- 2004 204 656
- JP-A- 2006 233 441
- JP-A- 2012 219 985
- US-A- 5 275 042
- US-B1- 7 721 600

## Beschreibung

### Technisches Gebiet

Die vorliegende Erfindung betrifft allgemein Durchflussmessungen mittels Ultraschall in teilgefüllten (offenen) Strecken, z.B. Gerinnen, aber auch in geschlossenen Strecken, z.B. Rohren.

### Stand der Technik

Zur Messung des Durchflusses in offenen Gerinnen kommen bekanntermassen Staukörper wie Venturi-Kanäle und Wehre/Überfälle zum Einsatz. Durch den Einbau im Gerinne entsteht ein Rückstau, der einerseits das zufliessende Abwasser beruhigt. Andererseits wird das Wasser beim Austritt aus der Engstelle in den offenen Kanal beschleunigt. Die Wasserstandhöhe im Staubereich steht dabei in einem definierten Verhältnis zur Durchflussmenge. Messtechnisch ist zur Ermittlung des Durchflusses lediglich die Messung der Höhe im Staubereich erforderlich. Baulich sind eine ausreichende Beruhigungsstrecke im Zuströmbereich sowie ausreichend Gefälle (kein Rückstau) im Auslaufbereich erforderlich.

Die Vorteile dieses Verfahrens sind z.B. die gute Reproduzierbarkeit, das Fehlen beweglicher Teile, eine einfache Kontrollierbarkeit, einfache Wasserstandmessung, die Eignung auch für verschmutztes Abwasser, sowie die einfache Reinigung. Bekannte Nachteile sind hingegen ein vergleichbar hoher Bauaufwand und Platzbedarf, ein hydraulischer Verlust, die Gefahr von Ablagerungen in der Beruhigungsstrecke oberhalb des Venturi-Kanals, Fehlmessungen bei Rückstau unterhalb der Venturi-Messstrecke.

Neuere Messprinzipien schätzen mit verschiedenen Methoden die mittlere Geschwindigkeit im Gerinne. Auch hier ist die Messung der Höhe erforderlich, um die Querschnittsfläche ermitteln zu können. Zur Anwendung kommen z.B. das Ultraschall-Laufzeitverfahren aufgrund der unterschiedlichen Schallausbreitung mit und gegen die Fliessrichtung oder das Ultraschall-Dopplerverfahren basierend auf dem Effekt der Frequenzänderung bei der Reflexion von Ultraschallsignalen an bewegten Teilen.

Das Messprinzip des Durchflusses mittels Ultraschall ist an sich seit mehr als 50 Jahren bekannt und es gibt reichlich (Patent-)Literatur zu diesem Thema, sowohl in Bezug auf Messungen in gefüllten Rohren sowie in Gerinnen. Speziell im Fall von Gerinnen erfolgt die Messung der horizontalen Fliessgeschwindigkeiten oft mittels Ultraschall-Kreuzstrecken mit auf verschiedenen Höhen angebrachten Ultraschallwandlern.

Ein Vorteil dieser Ultraschall-Messverfahren ist generell, dass der Strömungsquerschnitt nicht (wesentlich) eingeengt werden muss. Andererseits ist ein wesentlicher Nachteil dieser Verfahren, dass geringe Durchflussmengen gar nicht und sehr hohe Durchflussmengen nur eingeschränkt messbar sind.

Im Stand der Technik wird eine ganze Reihe von Vorschlägen gemacht, um auch bei geringen Durchflussmengen genauere/bessere Messergebnisse zu erzielen. Beispielhaft kann man folgende nennen: Erhöhung der Anzahl/Güte/Art der Sensoren, Verbesserung mittels Kalibrierung und in der Auswertung der Ergebnisse, Aufteilung auf mehrere einzeln je nach Durchfluss zuschaltbare Rinnen usw. WO9514214-A1 offenbart eine Vorrichtung zum Messen eines hydraulischen Durchflusses, umfassend eine Vielzahl von Ultraschall-Geschwindigkeitsdetektoren, die schräg auf verschiedenen Höhen in einem Abwasserrohr angeordnet sind.

Diese Lösungen sind jedoch teilweise (sehr) aufwändig, benötigen mehr Wartung und/oder sie sind anfälliger. Auch erhöhen die vorgeschlagenen Lösungen den Preis der so verbesserten Durchflussmesser.

### Aufgabe der Erfindung

Die Erfindung basiert auf dem Problem, dass sich kleine und kleinste Durchflüsse nur schwer oder gar nicht mit den oben erwähnten Lösungen messen lassen, weil sich nur wenige (oder sogar keine) Kreuzstrecken unter Wasser befinden. Eine Aufgabe der vorliegenden Erfindung ist es daher, eine Vorrichtung bereit zu stellen, um Durchflussmessungen in teilgefüllten (offenen) Strecken, z.B. Gerinnen, aber auch in geschlossenen Strecken, z.B. Rohren, messen zu können und das auch bei (sehr) geringem Durchfluss.

### Allgemeine Beschreibung der Erfindung

Diese Aufgabe wird erfindungsgemäss gelöst durch eine Vorrichtung zur Fliessgeschwindigkeitsmessung von strömenden Flüssigkeiten in Gerinnen oder (wenigstens zeitweise teilgefüllten) Rohrleitungen, wobei eine Ultraschall-Messeinrichtung zur Ermittlung der Fliessgeschwindigkeit vorgesehen ist. Die Ultraschall-Messeinrichtung ist eine der an sich bekannten Messeinrichtungen mit mehreren auf der gesamten Höhe beidseitig des Querschnitts übereinander beabstandet angeordneten Ultraschallwandlern, wobei jeweilige Sender und Empfänger ggf. seitlich versetzt sind. Erfindungsgemäss ist dabei der oben offene Querschnitt der Gerinne oder der oben geschlossene Querschnitt der Rohrleitungen wenigstens auf der Länge der Ultraschall-Messeinrichtung derart gestaltet, dass der untere Teil des Querschnitts einen verengten Teilbereich, eine sogenannte Rinne-in-Rinne-Form, aufweist.

In einer weiteren Ausgestaltung der Erfindung ist der verengte Teilbereich der sogenannten Rinne-in-Rinne-Form deshalb bevorzugt derart ausgestaltet, dass er sich selbst nach unten weiter verengt, also sozusagen eine V-Rinne-in-Rinne-Form darstellt. Auch hier ist eine oben offene und eine geschlossene Variante vorgesehen.

Die erfindungsgemässen Vorrichtungen sind besonders geeignet in Fällen mit hohen Schwankungen im Durchflussbereich, wobei die Erfindung besonders den Messbereich bei geringen Durchflüssen erhöht. Die hier vorgeschlagene Lösung betrifft somit eine spezielle Formgebung des Gerinnen- oder Rohrquerschnitts mittels der besonders bei geringen Durchflussmengen der Wasserstand hoch gehalten werden kann, was wiederum die Messung durch eine grössere Anzahl (vertikal beabstandeter) Kreuzstrecken erlaubt.

Die besondere Form erlaubt folglich die Messung in einem Bereich, der mit üblichen Querschnittsformen (rund oder rechteckig) nur schwer oder gar nicht messbar ist. Ausserdem wird dies erreicht, ohne (wesentliche) Änderungen an der Ultraschall-Messeinrichtung vorzunehmen, was sich positiv auf die Kosten der Vorrichtung niederschlägt. Dabei ist zu beachten, dass darüber hinaus die besondere Form den maximalen Durchfluss bei gleicher Gesamtfläche des Querschnitts nicht begrenzt.

Die Erfindung ist sowohl für Gerinne als auch für Rohrleitungen, d.h. sowohl für oben offene als auch für geschlossene Ausführungsformen verwendbar. Obwohl die erfindungsgemässe Vorrichtung sich auch für Messungen von ganz gefüllten (unter Druck stehenden) Rohrleitungen eignet, zeigen sich die Vorteile erst bei Teilfüllung und speziell bei niedrigen Durchflüssen.

Bei sehr geringen Durchflüssen kann die Vorrichtung weiterhin eine Schwelle stromabwärts der Ultraschall-Messeinrichtung am Boden des Gerinnes oder Rohrs umfassen. Mittels einer solchen Schwelle kann der Wasserstand in solchen Fällen künstlich erhöht werden. Es ist auch vorgesehen, dass die Schwelle erst bei sehr geringem Durchfluss zugeschaltet werden kann, z.B. durch eine ggf. steuerbare zusätzliche Klapp- oder Schiebevorrichtung.

Es ist zu erwähnen, dass die erfindungsgemässen Vorrichtungen mit oben offenem Querschnitt den am Venturi-Kanal geschätzten Vorteil der leichten Zugänglichkeit erhalten bleibt. Ausserdem ist eine solche Messvorrichtung sowohl in offener als auch in geschlossener Form sehr wartungsarm, was Verstopfungen und Ablagerungen anbelangt.

In einer weiteren Ausgestaltung betrifft die Erfindung eine geschlossene Form der hier beschriebenen Vorrichtung, die weiterhin ein Sperrventil stromabwärts der Ultraschall-Messeinrichtung zum Verschliessen des gesamten Querschnitts umfasst. Eine solche Vorrichtung wird bevorzugt zur Abflussreglung benutzt.

Das Sperrventil kann z.B. ein Klappenventil sein. Bevorzugt ist das Sperrventil steuerbar, z.B. ein pneumatisch angetriebenes Klappenventil innerhalb einer Rohrleitung (Abflussreglung "trocken") oder am Ende einer Rohrleitung (Abflussreglung "nass").

Das Sperrventil kann auch ein Schiebeventil sein, bevorzugt ein pneumatisch angetriebenes Plattenschieberventil innerhalb einer Rohrleitung (Abflussreglung "trocken").

In einem anderen Aspekt betrifft die Erfindung ebenfalls die Verwendung einer geschlossenen Ausführung der beschriebenen Vorrichtung als Abflussreglung innerhalb einer Rohrleitung (Abflussreglung "trocken") oder am Ende einer Rohrleitung (Abflussreglung "nass").

### Kurze Beschreibung der Figuren

Im Folgenden werden nun Ausgestaltungen der Erfindung anhand der beiliegenden Figuren beschrieben. Diese zeigen:
Fig. 1: Beispiele geeigneter Querschnitte (a und e) für die erfindungsgemässe Vorrichtung, sowie Querchnitte (b-d), die nicht zur Verwendung mit der erfindungsgemäßen Vorrichtung bestimmt sind.
Fig. 2: einen Quer- und einen Längsschnitt einer schematischen Darstellung einer Ausführungsform der erfindungsgemässen Vorrichtung.
Fig. 3: eine perspektivische Ansicht einer Ausführung der erfindungsgemässen Vorrichtung.
Fig. 4: einer schematischen Darstellung einer Ausführungsform mit Schwelle.
Weitere Einzelheiten und Vorteile der Erfindung können der nachfolgenden ausführlichen Beschreibung möglicher Ausführungsformen der Erfindung anhand der beiliegenden Figuren entnommen werden.

### Beschreibung einer/mehrerer Ausgestaltung(en) der Erfindung

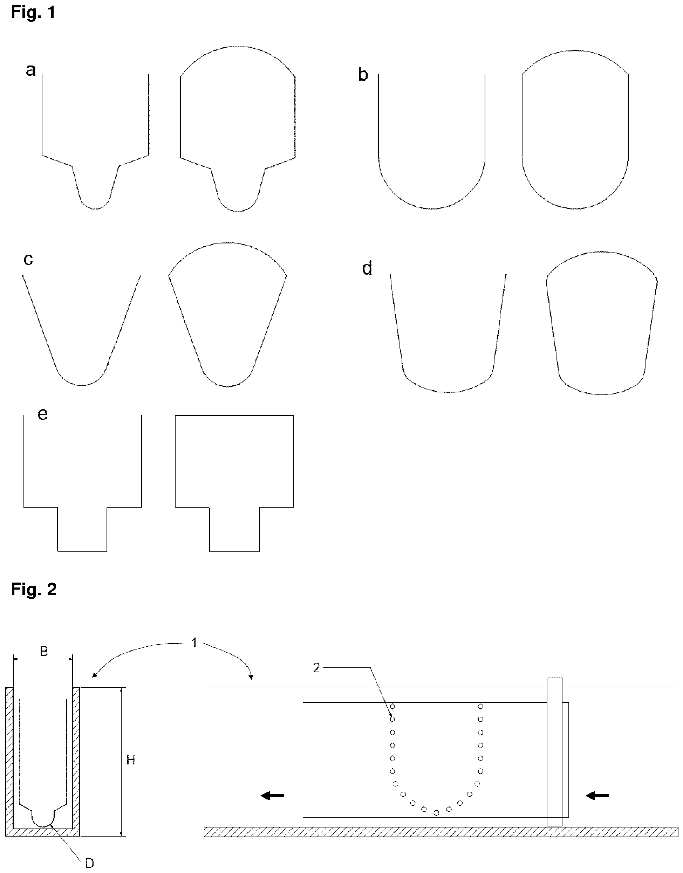

Die in Fig.1, zur Illustration der Erfindung, gezeigten Querschnitte b-d sind nur einige Beispiele sowohl von oben offenen Querschnitten (z.B. Gerinne), als auch als geschlossenen Ausführungen (z.B. Rohre), die nicht Teil der beanspruchten Erfindung sind. Die hierin beschriebene V-Formen können unten gerundet sein (Querschnitte c und d) oder eckig. Auch eine U-Form wie in Fig. 1b fällt unter den Begriff "V-Form". Kombinationen wie oben beschrieben sind ebenfalls möglich. Ausführungen aus Fig. 1a und 1e sind vom Typ Rinne-in-Rinne (1e) oder V-Rinne-in-Rinne (1a).

Fig. 2 zeigt eine oben offene Ausführungsform einer Vorrichtung 1 im Quer- und im Längsschnitt, wobei eine Anzahl von Ultraschall-Sensoren 2 auf beiden Seiten des Gerinnes vorgesehen sind. Die Pfeile zeigen die Fliessrichtung innerhalb der Vorrichtung 1. Die Masse der Vorrichtung hängen natürlich von der vorgesehenen Anwendung ab. Im gezeigten Beispiel hat die Vorrichtung 1 eine Breite B (in den meisten Anwendungen zwischen 100 und 10000 mm oder mehr, z.B. 400 oder 800 mm) und eine Höhe H (in den meisten Anwendungen zwischen 100 und 10000 mm oder mehr, z.B. 800 oder 1000 mm). Das hier gezeigte Gerinne hat einen unteren gerundeten V-Rinne-in-Rinne Bereich mit einem Durchmesser D.

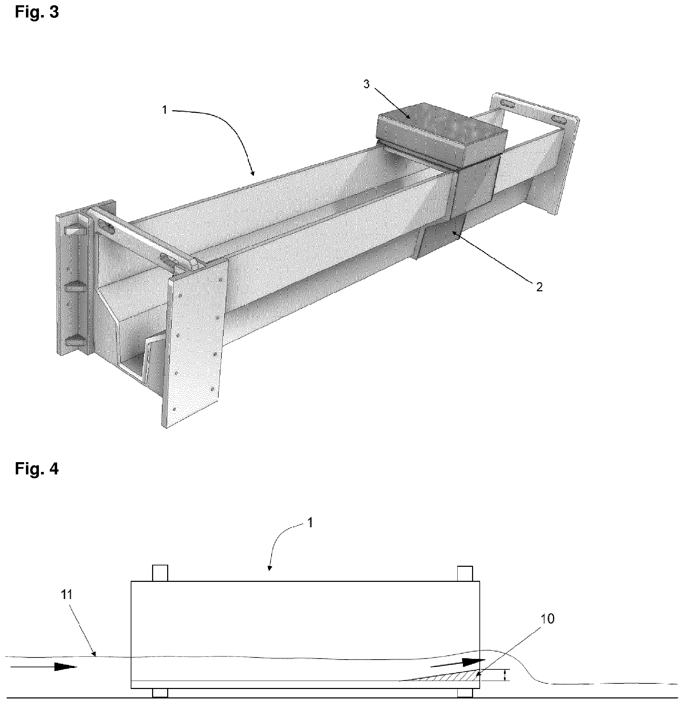

Fig. 3 eine perspektivische Ansicht einer vorteilhaften Ausführung der erfindungsgemässen Vorrichtung 1 mit seitlich angeordneten Ultraschall-Sensoren 2 und einem Gehäuse 3 für die Auswertungselektronik.

Fig. 4 veranschaulicht eine weitere Ausführungsform für (zeitweise) sehr geringe Durchflüsse. Die Vorrichtung 1 umfasst weiterhin eine Schwelle 10 stromabwärts der Ultraschall-Messeinrichtung (nicht gezeigt) am Boden des Gerinnes. Diese Schwelle 10 erhöht den Flüssigkeitsstand 11 und benetzt somit eine höhere Anzahl an Ultraschall-Sensoren.

### Zeichenerklärung:

- 1: Vorrichtung
- 2: Ultraschall-Sensoren
- 3: Elektronikgehäuse
- 10: Schwelle
- 11: Flüssigkeitsstand stromaufwärts der Schwelle
- B: Breite der Vorrichtung
- H: Höhe der Vorrichtung
- D: Durchmesser

## Patentansprüche

1. Vorrichtung (1) zur Fliessgeschwindigkeitsmessung von strömenden Flüssigkeiten mit einem Gerinne mit oben offenem Querschnitt oder mit einer Rohrleitung mit oben geschlossenem Querschnitt, wobei die Vorrichtung als ein Messstreckeneinsatz ausgebildet ist und wobei eine Ultraschall-Messeinrichtung zur Ermittlung der Fliessgeschwindigkeit mit mehreren auf der gesamten Höhe beidseitig des Querschnitts des Messstreckeneinsatz übereinander beabstandet angeordneten Ultraschallwandlern (2) vorgesehen ist, **dadurch gekennzeichnet, dass**
der Querschnitt des Messstreckeneinsatzes an der Stelle der Ultraschall-Messeinrichtung derart gestaltet ist, dass der untere Teil des Querschnitts einen verengten Teilbereich, sogenannte Rinne-in-Rinne-Form, aufweist.

2. Vorrichtung nach Anspruch 1, wobei der verengte Teilbereich der sogenannten Rinne-in-Rinne-Form sich nach unten verengt, sogenannte V-Rinne-in-Rinne-Form.

3. Vorrichtung nach einem der Ansprüche 1 oder 2, weiterhin umfassend eine Schwelle stromabwärts der Ultraschall-Messeinrichtung am Boden des Gerinnes oder Rohrs.

4. Vorrichtung nach Anspruch 3, wobei die Schwelle bei sehr geringem Durchfluss zuschaltbar ist, bevorzugt durch eine ggf. steuerbare zusätzliche Klappoder Schiebevorrichtung.

5. Vorrichtung nach einem der Ansprüche 1 bis 4, mit der Rohrleitung, weiterhin umfassend ein Sperrventil stromabwärts der Ultraschall-Messeinrichtung, zur Verwendung als Abflussreglung.

6. Vorrichtung nach Anspruch 5, wobei das Sperrventil ein Klappenventil ist, bevorzugt ein pneumatisch angetriebenes Klappenventil innerhalb der Rohrleitung oder am Ende der Rohrleitung.

7. Vorrichtung nach Anspruch 5, wobei das Sperrventil ein Schiebeventil ist, bevorzugt ein pneumatisch angetriebenes Plattenschieberventil innerhalb der Rohrleitung.

8. Verwendung einer Vorrichtung nach einem der Ansprüche 1 bis 7 zur Fliessgeschwindigkeitsmessung von strömenden Flüssigkeiten in einem Gerinne bzw. einem Rohr.

9. Verwendung einer Vorrichtung nach einem der Ansprüche 5 bis 7 als Abflussreglung.

## Claims

1. Device (1) for measuring the flow rate of flowing liquids with a gutter with a cross-section that is open at the top, or with a pipeline with a cross-section that is closed at the top, wherein the device is designed as a measuring path insert, and wherein an ultrasonic measuring means for determining the flow rate with a plurality of ultrasonic transducers (2) arranged over the total height on both sides of the cross-section of the measuring path insert one upon the other in a spaced apart manner is provided, **characterized in that** the cross-section of the measuring path insert is designed at the point of the ultrasonic measuring means such that the lower part of the cross-section has a narrowed partial area, a so-called gutter-in-gutter shape.

2. Device according to claim 1, wherein the narrowed partial area of the so-called gutter-in-gutter shape narrows downwards, a so-called V-gutter-in-gutter shape.

3. Device according to one of claims 1 or 2, further comprising a threshold downstream of the ultrasonic measuring means at the bottom of the gutter or pipe.

4. Device according to claim 3, wherein the threshold can be switched on at a very low rate of flow, preferably by an optionally controllable additional flipping or sliding device.

5. Device according to one of claims 1 to 4 with the pipeline, further comprising a shut-off valve downstream of the ultrasonic measuring means to be used as a draining regulation.

6. Device according to claim 5, wherein the shut-off valve is a flap valve, preferably a pneumatically driven flap valve, within the pipeline or at the end of the pipeline.

7. Device according to claim 5, wherein the shut-off valve is a sliding valve, preferably a pneumatically driven disk sliding valve, within the pipeline.

8. Use of a device according to one of claims 1 to 7 for measuring the flow rate of flowing liquids in a gutter or a pipe, respectively.

9. Use of a device according to one of claims 5 to 7 as a draining regulation.

## Revendications

1. Dispositif (1) de mesure de débit de liquides en écoulement avec une rigole à section supérieure ouverte ou un tube à section supérieure fermée, dans lequel le dispositif est conçu en tant qu'un insert de trajet de mesure et dans lequel il est prévu un dispositif de mesure par ultra-sons pour déterminer le débit avec plusieurs transducteurs ultrasoniques (2) disposés à distance l'un sur l'autre sur toute la hauteur des deux côtés de la section de l'insert de trajet de mesure, **caractérisé en ce que**
la section de l'insert de trajet de mesure à l'emplacement du dispositif de mesure par ultra-sons est ainsi conçue que la partie inférieure de la section présente une partie rétrécie, dite forme rigole-dans-rigole.

2. Dispositif selon la revendication 1, dans lequel la partie rétrécie de ladite forme rigole-dans-rigole se rétrécit vers le bas, dite forme rigole-dans-rigole en V.

3. Dispositif selon la revendication 1 ou 2, comprenant en outre un seuil en aval du dispositif de mesure par ultra-sons sur le fond de la rigole ou du tube.

4. Dispositif selon la revendication 3, dans lequel le seuil peut être raccordé en cas de débit très faible, de préférence par un dispositif rabattable ou à coulisse supplémentaire pouvant être commandé.

5. Dispositif selon l'une des revendications 1 à 4, avec le tube, comprenant en outre une soupape d'arrêt en aval du dispositif de mesure par ultra-sons, destinée à être employée en tant que régulation d'évacuation.

6. Dispositif selon la revendication 5, dans lequel la soupape d'arrêt est un clapet, de préférence un clapet entraîné de manière pneumatique, à l'intérieur du tube ou en fin du tube.

7. Dispositif selon la revendication 5, dans lequel la soupape d'arrêt est une soupape à coulisse, de préférence une soupape à coulisse à sièges parallèles entraînée par voie pneumatique, à l'intérieur du tube.

8. Utilisation d'un dispositif selon l'une des revendications 1 à 7 pour la mesure de débit de liquides en écoulement dans une rigole, respectivement un tube.

9. Utilisation d'un dispositif selon l'une des revendications 5 à 7 en tant que régulation d'évacuation.
